(19)

Europäisches
Patentamt
European
Patent Office
Office européen
des brevets

(11) **EP 2 418 908 A1**

(12) **EUROPEAN PATENT APPLICATION**
published in accordance with Art. 153(4) EPC

(43) Date of publication:
**15.02.2012 Bulletin 2012/07**

(21) Application number: **09842860.0**

(22) Date of filing: **07.04.2009**

(51) Int Cl.:
**H04W 74/08** (2009.01)

(86) International application number:
**PCT/CN2009/071179**

(87) International publication number:
**WO 2010/115299 (14.10.2010 Gazette 2010/41)**

(84) Designated Contracting States:
**AT BE BG CH CY CZ DE DK EE ES FI FR GB GR
HR HU IE IS IT LI LT LU LV MC MK MT NL NO PL
PT RO SE SI SK TR**

(71) Applicant: **Huawei Technologies Co., Ltd.
Longgang District
Shenzhen 518129 (CN)**

(72) Inventors:
- **HE, Chuanfeng
  Shenzhen
  Guangdong 518129 (CN)**
- **GAO, Yongqiang
  Shenzhen
  Guangdong 518129 (CN)**
- **MA, Xueli
  Shenzhen
  Guangdong 518129 (CN)**

- **MA, Jie
  Shenzhen
  Guangdong 518129 (CN)**
- **HU, Zhenxing
  Shenzhen
  Guangdong 518129 (CN)**
- **YANG, Bo
  Shenzhen
  Guangdong 518129 (CN)**
- **YAN, Kun
  Shenzhen
  Guangdong 518129 (CN)**

(74) Representative: **Barth, Stephan Manuel et al
Isarpatent
Postfach 44 01 51
80750 München (DE)**

(54) **RANDOM ACCESS METHOD AND THE DEVICE THEREOF**

(57)    A method and an apparatus for random access are provided. The method includes: receiving, by a User Equipment (UE), an access indication message including a UE identifier (ID) and a corresponding resource number (101); sending a Dedicated Physical Control Channel (DPCCH) preamble by using an uplink resource corresponding to the resource number and preset initial transmit power (102); and if it is determined that an acquisition indication is received, determining, by the UE, that access succeeds (103). Through the method, the UE firstly sends the DPCCH preamble to a base station, determines that the access succeeds when receiving the acquisition indication from the base station, and performs uplink transmission including the transmission of uplink Dedicated Physical Channel (DPCCH) control information, uplink data and/or feedback information after the access succeeds. Therefore, the reliability of information transmission is ensured, the delay in an access process is reduced, and fast implementation of uplink search is ensured.

FIG. 1

## Description

## FIELD OF THE INVENTION

The present invention relates to the field of communications technologies, and in particular, to a method and an apparatus for random access.

## BACKGROUD OF THE INVENTION

Currently, in order to fully utilize a High Speed Downlink Shared Channel (HS-DSCH) resource in the CELL-Forward Access Channel (CELL-FACH) state and increase downlink throughput in the CELL-FACH state, a Node B may control a User Equipment (UE) to perform enhanced uplink access to provide feedback for downlink HS-DSCH transmission. In this process, the Node B sends a Shared Control Channel for HS-DSCH order (HS-SCCH order) carrying a UE ID and a 5-bit Enhanced Dedicated Channel (E-DCH) resource number to the UE. After receiving the HS-SCCH order, the UE does not perform a random access process but after predetermined time, begins to use an uplink resource indicated by the resource number to transmit High Speed Dedicated Physical Control Channel (HS-DPCCH)/Dedicated Physical Control Channel (DPCCH) to provide Hybrid Automatic Repeat request (HARQ) Acknowledge (ACK)/ Negative Acknowledge (NACK) and Channel Quality Indicator (CQI) feedback.

However, during the implementation of the present invention, the inventors find that the prior art at least has the following problems: After receiving the HS-SCCH order sent by the Node B, the UE directly begins to perform uplink transmission, so the reliability of transmission cannot be ensured, an adverse effect on uplink search is generated, and the objective of reducing access delay cannot be achieved.

## SUMMARY OF THE INVENTION

The present invention is directed to a method and an apparatus for random access. A UE sends identification information to a base station before performing uplink transmission, and determines that an access succeeds when receiving an acquisition indication from the base station. Therefore, the reliability of information transmission is ensured, the delay in an access process is reduced, and fast implementation of uplink search is ensured.

To achieve the foregoing objectives, an embodiment of the present invention provides a method for random access, and the method includes: a UE receives an access indication message including a UE identifier and a corresponding resource number; then the UE sends a DPCCH preamble by using an uplink resource corresponding to the resource number and a preset initial transmit power; and if determining that an acquisition indication is received, the UE determines that an access succeeds.

In order to achieve the foregoing objectives, an embodiment of the present invention provides a method for random access, and the method includes:

an access indication message including a UE identifier and a corresponding resource number is sent; if a DPCCH preamble sent by a UE is detected, an acquisition indication is sent to the UE; and if the DPCCH preamble sent by the UE is not detected, the acquisition indication is not sent to the UE, or an indication indicating that the DPCCH preamble is not detected is sent to the UE.

In order to achieve the foregoing objectives, an embodiment of the present invention provides an apparatus for random access, and the apparatus includes:

a resource receiving module, configured to receive an access indication message including a UE identifier and a corresponding resource number; a preamble sending module, connected to the resource receiving module and configured to send a DPCCH preamble by using an uplink resource corresponding to the resource number and preset initial transmit power; and an access determination module, configured to determine an access succeeds when an acquisition indication is received.

In order to achieve the foregoing objectives, an embodiment of the present invention provides an apparatus for random access, and the apparatus includes:

a resource information sending module, configured to send an access indication message including a UE identifier and a corresponding resource number; and an indication sending module, configured to send an acquisition indication to a UE if a DPCCH preamble sent by the UE is detected.

The beneficial effect of the present invention is as follows. The UE sends the DPCCH preamble to the base station before performing the uplink transmission, and determines that the access succeeds when receiving the acquisition indication from the base station. Therefore, the reliability of information transmission is ensured, the delay in the access process is reduced, and fast implementation of uplink search is ensured.

## BRIEF DESCRIPTION OF THE DRAWINGS

The accompanying drawings are illustrated to provide further understanding of the invention, constitute a part of this specification, and are not intended to limit the present invention.

FIG. 1 is a flow chart of a method for random access according to Embodiment 1 of the present invention;

FIG. 2 is a flow chart of a method for random access according to Embodiment 2 of the present invention;

FIG. 3 is a flow chart of a method for random access according to Embodiment 3 of the present invention;

FIG. 4 is a flow chart of a method for random access according to Embodiment 4 of the present invention;

FIG. 5 is a schematic structure diagram of an apparatus for random access according to Embodiment 5 of the present invention;

FIG. 6 is a schematic structure diagram of an apparatus for random access according to Embodiment 6 of the present invention;

FIG. 7 is a schematic structure diagram of an apparatus for random access according to Embodiment 7 of the present invention; and

FIG. 8 is a schematic structure diagram of an apparatus for random access according to Embodiment 8 of the present invention.

## DETAILED DESCRIPTION OF THE EMBODIMIENTS

In order to make the objectives, technical solutions, and advantages of the present invention more comprehensible, embodiments of the present invention are described in detail in the following with the reference to the accompanying drawings. Herein, the exemplary embodiments of the present invention and descriptions of the embodiments are only intended to explain the present invention, instead of limiting the present invention.

The embodiments of the present invention provide a method and an apparatus for random access. The present invention is described in detail in the following with reference to the accompanying drawings.

### Embodiment 1

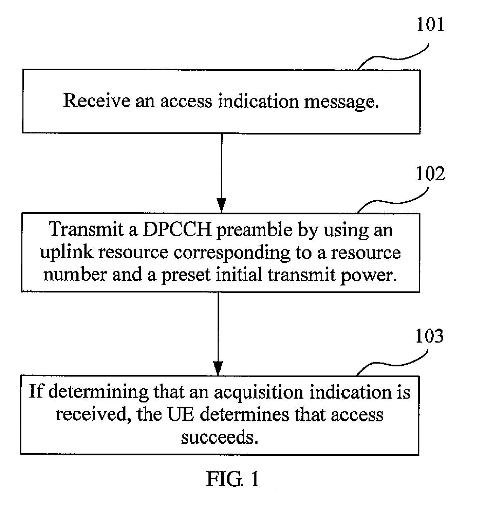

An embodiment of the present invention provides a method for random access. As shown in FIG. 1, the method includes: A UE receives an access indication message including resource information, such as a UE identifier and a corresponding resource number (see step 101). The UE sends a DPCCH preamble by using an uplink resource corresponding to the resource number and a preset initial transmit power (see step 102). And, if determining that an acquisition indication is received, the UE determines that an access succeeds (see step 103).

In this embodiment, the UE may receive the access indication message sent by a base station. In a 3rd Generation Partnership Project (3GPP) Wide-band Code Division Multiple Access (WCDMA) network system, the UE may receive the access indication message sent by a Node B, and the access indication message may be, but not limited to, an HS-SCCH order. Other messages may be adopted according to actual requirements. The uplink resource indicated in the access indication message may be an E-DCH resource, and the resource number in the access indication message may be, but not limited to, a 5-bit E-DCH resource number.

In this embodiment, a suitable initial transmit power may be set according to a preamble power, a minimum power requirement, and a maximum allowable power.

In this embodiment, after the UE sends the DPCCH preamble, if receiving the acquisition indication returned by the base station, the UE determines that the UE an access succeeds. In this way, after the access succeeds, the UE may perform uplink transmission including the transmission of uplink Dedicated Physical Control Channel (DPCCH) control information, uplink data and/or feedback information. For example, in the 3GPP WCDMA network system, if receiving the acquisition indication sent by the Node B, the UE determines that the UE the access succeeds.

The acquisition indication may be a Transmit Power Control (TPC) order which may be 2-bit information. The 2-bit information may be, but not limited to, 11 or 00, and other information representation may also be adopted.

It can be known from the embodiment that, the UE firstly sends the DPCCH preamble to the base station, determines that the access succeeds when receiving the acquisition indication from the base station, and performs the uplink transmission including the transmission of the uplink DPCCH control information, the uplink data and/or the feedback information after the access succeeds. Therefore, the reliability of information transmission is ensured, the delay in an access process is reduced, and fast implementation of uplink search is ensured.

### Embodiment 2

An embodiment of the present invention provides a method for random access. The method is described in detail in the following by taking a 3GPP WCDMA network system as an example.

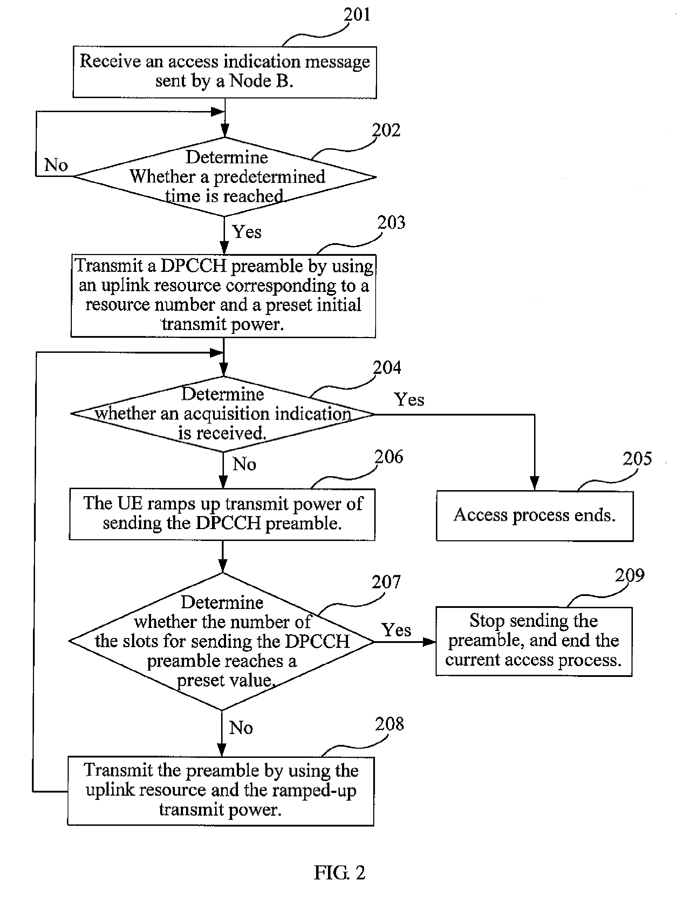

As shown in FIG. 2, the method includes the following steps.

Step 201: A UE receives an access indication message sent by a Node B, where the access indication message includes a UE identifier and a corresponding resource number.

In this embodiment, the UE identifier is represented by UE ID. The access indication message may be an HS-SCCH order. An uplink resource may be an E-DCH resource, and the resource number may be a 5-bit E-DCH resource number, but the present invention is not limited thereto.

Step 202: Determine whether predetermined time is reached. In this embodiment, the predetermined time is a time interval $\tau_{h-d}$ between a starting time of a sub-frame where the HS-SCCH order received by the UE is located and time when the UE sends a DPCCH preamble. The time interval $\tau_{h-d}$ is relevant to an offset parameter $S_{offset}$ corresponding to the E-DCH resource and can be obtained by the following equation, but the present invention is not limited thereto, and the time interval may be defined by other equations.

$$\tau_{h-d} = (10240 + 256 * S_{offset} + \tau_0) \text{ chips}$$

where the $S_{offset}$ may be configured by a network side, for example, by a Radio Network Controller (RNC), a value range of $S_{offset}$ is 0-9, and the parameter $S_{offset}$ is included in each E-DCH resource configuration; $\tau_0$=1024 chips is a fixed deviation between uplink frame timing and downlink frame timing, the chips represent chips, and 1 slot = 2560 chips.

Step203: If the UE, in step 202, determines that the predetermined time is reached, the UE begins to send the DPCCH preamble by using the uplink resource corresponding to the resource number in the access indication message and a preset initial transmit power. The initial transmit power may be set according to a preamble power, a minimum power requirement, and a maximum allowable power.

Step 204: After beginning to send the DPCCH preamble, the UE determines whether an acquisition indication sent by the Node B is received. If the acquisition indication sent by the Node B is received, step 205 is executed. If the acquisition indication sent by the Node B is not received, step 206 is executed.

The acquisition indication may be a TPC order which may be 2-bit information, for example, 11 or 00. If indication information firstly received by the UE is 11 or 00, the UE may determine that the acquisition indication sent by the Node B is received. If the UE does not receive any indication information or receives 2-bit indication information which is 01 or 10, the UE may determine that the acquisition indication sent by the Node B is not received. However, the present invention is not limited thereto, and the acquisition indication may be represented by other information.

In this embodiment, the Node B may send the acquisition indication in a downlink Fractional Dedicated Physical Channel (F-DPCH) slot corresponding to an uplink slot that is adopted for sending the DPCCH preamble. After beginning to send the DPCCH preamble, the UE may receive the acquisition indication sent by the Node B in the downlink F-DPCH slot corresponding to a uplink slot that is adopted for sending the DPCCH preamble, but the present invention is not limited thereto.

Step 205: If it is determined that the acquisition indication is received, an access process ends.

Step 206: If determining that the acquisition indication is not received, the UE ramps up power for sending the DPCCH preamble, and a ramp step may be configured by the network side, but the present invention is not limited thereto.

Step 207: Determine whether the number of the slots for sending the DPCCH preamble reaches a preset value. If the preset value is not reached, step 208 is executed. If the preset value is reached, step 209 is executed.

In this embodiment, the preset value is the pre-configured maximum number of times of retransmission and may be configured by the network side, but the present invention is not limited thereto.

In this embodiment, a preamble retransmission counter may be used for counting. A value of the preamble retransmission counter may be subtracted by 1, each time the power is ramped up. If the value of the preamble retransmission counter is larger than 0, the preset value is not reached. If the value of the preamble retransmission counter is equal to 0, the preset value is reached.

Step 208: If the preset value is not reached, the UE transmits the DPCCH preamble by using the ramped-up power, and executes step 204 to step 208 repeatedly until the acquisition indication is received.

Step 209: If the preset value is reached, stop sending the DPCCH preamble, and the current access process ends.

In this embodiment, after determining that the access succeeds in step 205, the UE stops sending the DPCCH preamble, and meanwhile, the UE begins to perform transmission including the transmission of uplink DPCCH control information, uplink data, and feedback information.

When the uplink DPCCH control information is begun to be sent, a power control order is received in a corresponding downlink F-DPCH slot. When the DPCCH control information is transmitted, an inner-loop power control process may be performed, that is, transmit power for sending the DPCCH control information is adjusted according to a TPC order received in the downlink F-DPCH slot corresponding to an uplink slot that is adopted for sending the DPCCH control information.

In this embodiment, if the received TPC order is 11, it may be determined that a type of the acquisition indication is controlling to increase the transmit power for sending the DPCCH control information; if the received TPC order is 00, it may be determined that the type of the acquisition indication is controlling to decrease the transmit power for sending the DPCCH control information, but the present invention is not limited thereto, and vice versa. In this way, the UE may adjust the transmit power according to the received TPC order, and transmit the DPCCH control information by using the adjusted transmit power.

In this embodiment, the uplink data may include uplink service data and signaling, and the feedback information may include Hybrid Automatic Repeat request (HARQ) feedback and Channel Quality Indicator (CQI) feedback provided for the downlink HS-DSCH transmission, but the present invention is not limited to the foregoing data, and other data may also be included according to actual requirements.

It can be known from the embodiment that, the UE firstly sends the indication information to the base station, determines that the access succeeds when receiving the acquisition indication from the base station, and performs uplink transmission including the transmission of the uplink DPCCH control information, the uplink data and/or the feedback information after the access succeeds. When the UE does not receive the acquisition indication, the UE may ramp up the power of sending the DPCCH preamble, so as to continuously send the DPCCH preamble with the ramped-up power. In this way, the delay in the access process is reduced, and fast implementation of uplink search is ensured, thereby reducing the delay and enabling the UE to begin to perform uplink feedback as soon as possible.

### Embodiment 3

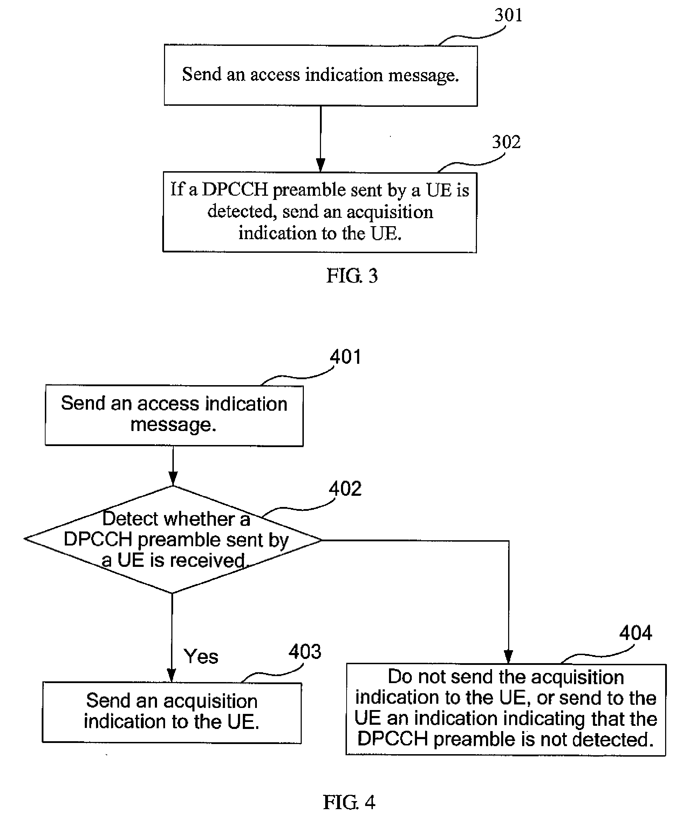

An embodiment of the present invention provides a method for random access. As shown in FIG. 3, the method includes: sending an access indication message including a UE ID and a corresponding resource number (see step 301); and if a DPCCH preamble sent by a UE is detected, sending an acquisition indication to the UE (see step 302).

In this embodiment, a resource indicated in the access indication message may be the E-DCH resource.

In this embodiment, in a WCDMA network system, the UE may transmit the DPCCH preamble through the E-DCH uplink resource. After a Node B detects the DPCCH preamble, the Node B sends the acquisition indication in a downlink F-DPCH slot corresponding to an uplink slot that is adopted for sending the DPCCH preamble, but the present invention is not limited thereto. The acquisition indication is as described in Embodiment 2.

It can be known that, after detecting the DPCCH preamble sent by the UE, the Node B may send the acquisition indication to the UE, so as to enable the UE to complete access after the UE receives the acquisition indication.

### Embodiment 4

An embodiment of the present invention provides a method for random access. As shown in FIG. 4, the method includes: sending an access indication message including a UE identifier and a corresponding resource number (see step 401); detecting identification information sent by a UE (see step 402); if a DPCCH preamble sent by the UE is detected, sending an acquisition indication to the UE (see step 403); and if the DPCCH preamble sent by the UE is not detected, not sending the acquisition indication to the UE, or sending to the UE an indication indicating that the DPCCH preamble is not detected (see step 404).

In this embodiment, the acquisition indication may be a TPC order which may be 2-bit information, for example, 11 or 00.

If the Node B does not detect the DPCCH preamble, no indication information is sent, or 2-bit information is sent, where the 2-bit information indicates that the DPCCH preamble is not detected and may be 01 or 10.

It can be known that, after the Node B sends the access indication message and detects the DPCCH preamble sent by the UE, the Node B may send the acquisition indication to the UE to enable the UE to complete access after the UE receives the acquisition indication. If the Node B does not detect the DPCCH preamble sent by the UE, no information is sent or information that the DPCCH preamble is not detected is sent to the UE to enable the UE to ramp up the power of sending the DPCCH preamble, so as to continuously send the DPCCH preamble with the ramped-up power. In this way, the delay in an access process is reduced, and fast implementation of uplink search is ensured, thereby reducing the delay and enabling the UE to begin to perform uplink feedback as soon as possible.

### Embodiment 5

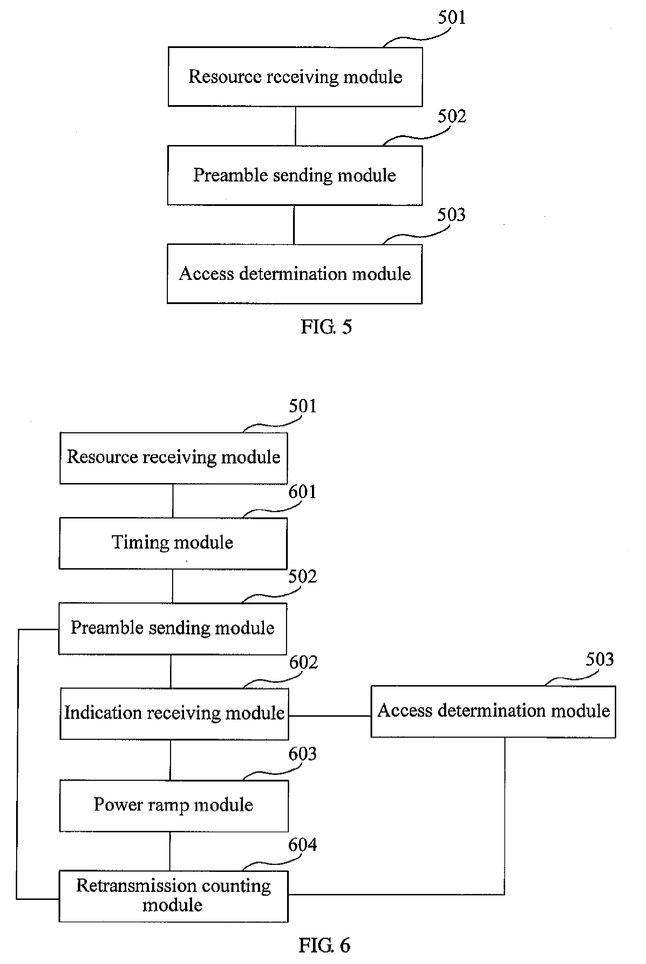

An embodiment of the present invention provides an apparatus for random access. As shown in FIG. 5, the apparatus includes a resource receiving module 501, a preamble sending module 502, and an access determination module 503. The resource receiving module 501 is configured to receive an access indication message including a UE identifier and a corresponding resource number. The preamble sending module 502, which is connected to the resource receiving module 501, is configured to send a DPCCH preamble by using an uplink resource corresponding to the resource number and a preset initial transmit power. The access determination module 503 is configured to determine that an access succeeds when an acquisition indication is received.

In this embodiment, the apparatus may be a physical module of the UE or a logical module of the UE. A work process of the apparatus is as described in Embodiment 1 and will not be described herein again.

It can be known from the embodiment that, the apparatus sends the DPCCH preamble to a base station according to the received access indication message, determines that the access succeeds when receiving the acquisition indication from the base station, and performs uplink transmission, uplink data and feedback information after the access succeeds. Therefore, the reliability of information transmission is ensured, the delay in an access process is reduced, and fast implementation of uplink search is ensured.

### Embodiment 6

An embodiment of the present invention provides an apparatus for random access. As shown in FIG. 6, the apparatus includes a resource receiving module 501, a preamble sending module 502, and an access determination module 503, and functions of the three modules are similar to those in Embodiment 5 and will not be described herein again.

As shown in FIG. 6, the apparatus may further include a timing module 601. The timing module 60, which is connected to the resource receiving module 501 and the preamble sending module 502, is configured to determine whether predetermined time is exceeded after an access indication message is received. If determining that the predetermined time is exceeded, the timing module 60 is configured to instruct the preamble sending module 502 to send a DPCCH preamble by using an uplink resource corresponding to a resource number and a preset initial transmit power. The process of determining the predetermined time is as described in step 202 of Embodiment 2 and will not be described herein again.

As shown in FIG. 6, the apparatus may further include an indication receiving module 602. The indication receiving module 602, which is connected to the preamble sending module 502 and the access determination module 503, is configured to determine whether an acquisition indication is received after the preamble sending module 502 sends the DPCCH preamble. If determining that the acquisition indication is received, the indication receiving module 602 is configured to instruct the access determination module 503 to determine that the access succeeds.

In this way, after the access succeeds, the UE may perform uplink transmission including the transmission of uplink DPCCH control information, uplink data and feedback information, as described in Embodiment 2, and the details will not be described herein again.

As shown in FIG. 6, the apparatus further includes a power ramp module 603. The power ramp module 603, which may be connected to the indication receiving module 602, is configured to ramp up the transmit power when the indication receiving module 602 determines that the acquisition indication is not received. In this way, the preamble sending module 502 is further configured to send the DPCCH preamble by using the uplink resource and the ramped-up transmit power, until the indication receiving module 602 determines that the acquisition indication is received.

Moreover, as shown in FIG. 6, the apparatus may further include a retransmission counting module 604. The retransmission counting module 604, which is connected to the power ramp module 603, the preamble sending module 502, and the access determination module 503, is configured to determine whether the number of uplink slots of the uplink resource for sending the DPCCH preamble exceeds a preset value after the power ramp module 603 ramps up the transmit power. The preamble sending module 502 is further configured to send the DPCCH preamble by using the uplink resource and the ramped-up transmit power when the retransmission counting module 603 determines that the number of uplink slots of the uplink resource for sending the DPCCH preamble does not exceed the preset value. The access determination module 503 is further configured to determine to end an access process when the retransmission counting module 603 determines that the number of uplink slots of the uplink resource for sending the DPCCH preamble exceeds the preset value.

In this embodiment, the apparatus may be a physical module of the UE or a logical module of the UE. A work process of the apparatus is as described in Embodiment 2 and will not be described herein again.

It can be known from the embodiment that, the apparatus sends indication information to a base station, determines that the access succeeds when receiving the acquisition indication from the base station, and performs uplink transmission, uplink data and feedback information after the access succeeds. When the UE does not receive the acquisition indication, the UE may ramp up the power of sending the DPCCH preamble, so as to continuously send the DPCCH preamble with the ramped-up power. In this way, the delay in the access process is reduced, and fast implementation of uplink search is ensured, thereby reducing the delay and enabling the UE to begin to perform uplink feedback as soon as possible.

## Embodiment 7

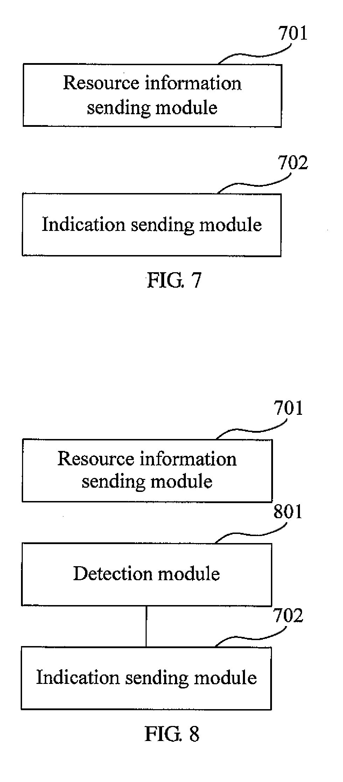

An embodiment of the present invention provides an apparatus for random access. As shown in FIG. 7, the apparatus includes a resource information sending module 701 and an indication sending module 702. The resource information sending module 701 is configured to send an access indication message including a UE identifier and a corresponding resource number. The indication sending module 702 is configured to send an acquisition indication to a UE when a DPCCH preamble sent by the UE is detected.

In this embodiment, the DPCCH preamble is a preamble sent by the UE through the uplink resource indicated by the resource number, but the present invention is not limited thereto.

In this embodiment, the apparatus may be a physical module a Node B or a logical module of a Node B. A work process of the apparatus is as described in Embodiment 3 and will not be described herein again.

In this embodiment, the acquisition indication may be a TPC order which may be 2-bit information, for example, 11 or 00.

It can be known that, after detecting the DPCCH preamble sent by the UE, the Node B may send the acquisition indication to the UE to enable the UE to complete access after the UE receives the acquisition indication.

## Embodiment 8

An embodiment of the present invention provides an apparatus for random access. As shown in FIG. 8, the apparatus includes a resource information sending module 701 and an indication sending module 702, and functions of the two modules are similar to those in Embodiment 7 and will not be described herein again.

Moreover, as shown in FIG. 8, the apparatus further includes a detection module 801, which is connected to the indication sending module 702, is configured to detect whether a DPCCH preamble sent by a UE is received. If the detection module 801 detects that the DPCCH preamble sent by the UE is received, the indication sending module 702 is configured to send an acquisition indication to the UE. If the detection module 801 does not detect the DPCCH preamble sent by the UE, the indication sending module 702 does not send the acquisition indication to the UE, or sends to the UE an indication indicating that the DPCCH preamble is not detected.

In this embodiment, the DPCCH preamble is a preamble sent by the UE through the uplink resource indicated by the resource number, but the present invention is not limited thereto.

In this embodiment, the apparatus may be a physical module of a Node B or a logical module of a Node B. A work process of the apparatus is as described in Embodiment 4 and will not be described herein again.

It can be known that, after detecting the DPCCH preamble sent by the UE, the Node B may send the acquisition indication to the UE to enable the UE to complete access after the UE receives the acquisition indication. If the DPCCH preamble is not detected, no information is sent, or an indication indicating that the DPCCH preamble is received is sent.

Through the foregoing descriptions of the embodiments, it is apparent to those skilled in the art that, the present invention may be accomplished by hardware, and definitely may also be accomplished by software in combination with a necessary universal hardware platform. Base on this, the technical solutions of the present invention may be embodied in the form of a software product. The software product may be stored in one nonvolatile storage medium (for example, Compact Disc Read-Only Memory (CD-ROM), Universal Serial Bus (USB) flash drive, or removable hard disk) and contain several instructions adopted to instruct computer equipment (for example, a personal computer, a server, or network equipment) to perform the methods according to the embodiments of the present invention.

The objectives, technical solutions, and beneficial effects of the present invention have been described in detail through the foregoing specific embodiments. It should be understood that the foregoing descriptions are merely about specific embodiments of the present invention, but not intended to limit the protection scope of the present invention. Any modification, equivalent replacement, or improvement made without departing from the spirit and principle of the present invention should fall within the protection scope of the present invention.

**Claims**

1. A method for random access, comprising:

   receiving, by a User Equipment (UE), an access indication message, wherein the access indication message comprises a UE identifier and a corresponding resource number;
   sending a Dedicated Physical Control Channel (DPCCH) preamble by using an uplink resource corresponding to the resource number and a preset initial transmit power; and
   determining, by the UE, that an access succeeds if the UE determines that an acquisition indication is received,.

2. The method according to claim 1, wherein if the UE determines that the acquisition indication is not received, the method further comprises:

   ramping up the initial transmit power to obtain a ramped-up transmit power; and
   sending the DPCCH preamble by using the uplink resource and the ramped-up transmit power, until the UE receives the acquisition indication.

3. The method according to claim 2, wherein after the ramping up the initial transmit power, the method further comprises:

   if the UE determines that the number of uplink slots of the uplink resource for sending the DPCCH preamble reaches a preset value, ending the access process; and
   if the UE determines that the number of uplink slots of the uplink resource for sending the DPCCH preamble does not reach the preset value, performing the sending the DPCCH preamble by using the uplink resource and the ramped-up transmit power, until the UE receives the acquisition indication.

4. The method according to any one of claims 1 to 3, wherein the acquisition indication is a Transmit Power Control order.

5. The method according to claim 1, wherein the acquisition indication is received through a downlink Fractional Dedicated Physical Channel.

6. A method for random access, comprising:

   sending an access indication message, wherein the access indication message comprises a User Equipment (UE) identifier and a corresponding resource number;
   if a Dedicated Physical Control Channel (DPCCH) preamble sent by a UE is detected, sending an acquisition indication to the UE; and if the DPCCH preamble sent by the UE is not detected, not sending the acquisition indication to the UE, or sending to the UE an indication indicating that the DPCCH preamble is not detected.

7. The method according to claim 6, wherein the acquisition indication is a Transmit Power Control order.

8. The method according to claim 6, wherein the sending the acquisition indication to the UE comprises: sending the acquisition indication through a downlink Fractional Dedicated Physical Channel to the UE.

9. An apparatus for random access, comprising:

a resource receiving module, configured to receive an access indication message, wherein the access indication message comprising a User Equipment (UE) identifier and a corresponding resource number;
a preamble sending module, connected to the resource receiving module and configured to send a Dedicated Physical Control Channel (DPCCH) preamble by using an uplink resource corresponding to the resource number and a preset initial transmit power; and
an access determination module, configured to determine that an access succeeds when an acquisition indication is received.

10. The apparatus according to claim 9, wherein the acquisition indication is a Transmit Power Control order.

11. The apparatus according to claim 9, further comprising:

an indication receiving module, connected to the preamble sending module and the access determination module, and configured to determine whether the acquisition indication is received after the preamble sending module sends the DPCCH preamble, and to instruct the access determination module to determine that the access succeeds if the indication receiving module determines that the acquisition indication is received.

12. The apparatus according to claim 11, further comprising:

a power ramp module, connected to the indication receiving module and the preamble sending module, and configured to ramp up the initial transmit power to obtain ramped-up transmit power when the indication receiving module determines that the acquisition indication is not received; wherein
the preamble sending module is further configured to send the DPCCH preamble by using the uplink resource and the ramped-up transmit power until the acquisition indication is received.

13. The apparatus according to claim 12, further comprising:

a retransmission counting module, connected to the power ramp module, the preamble sending module, and the access determination module, and configured to determine whether the number of uplink slots of the uplink resource for sending the DPCCH preamble reaches a preset value; wherein
the preamble sending module is further configured to send the DPCCH preamble by using the uplink resource and the ramped-up transmit power when the retransmission counting module determines that the number of uplink slots of the uplink resource for sending the DPCCH preamble does not reach the preset value; and
the access determination module is further configured to determine to end the access process when the retransmission counting module determines that the number of uplink slots of the uplink resource for sending the DPCCH preamble exceeds the preset value.

14. An apparatus for random access, comprising:

a resource information sending module, configured to send an access indication message, wherein the access indication message comprises a User Equipment (UE) identifier and a corresponding resource number; and
an indication sending module, configured to send an acquisition indication to a UE if a Dedicated Physical Control Channel (DPCCH) preamble sent by the UE is detected.

15. The apparatus according to claim 14, wherein the acquisition indication is a Transmit Power Control order.

16. The apparatus according to claim 14, further comprising:

a detection module, configured to detect whether the DPCCH preamble sent by the UE is received, wherein
if the DPCCH preamble sent by the UE is not detected, the indication sending module is further configured to not send the acquisition indication to the UE, or to send to the UE an indication indicating that the DPCCH preamble is not detected; and

if the DPCCH preamble sent by the UE is detected, the detection module is further configured to instruct the indication sending module to send the acquisition indication to the UE.

101

Receive an access indication message.

102

Transmit a DPCCH preamble by using an uplink resource corresponding to a resource number and a preset initial transmit power.

103

If determining that an acquisition indication is received, the UE determines that access succeeds.

FIG. 1

201

Receive an access indication message
sent by a Node B.

202

No ← Determine
Whether a predetermined
time is reached

Yes

203

Transmit a DPCCH preamble by using
an uplink resource corresponding to a
resource number and a preset initial
transmit power.

204

Determine
whether an acquisition indication
is received.

Yes

205

Access process ends.

No

206

The UE ramps up transmit power of
sending the DPCCH preamble.

207

Determine
whether the number of
the slots for sending the DPCCH
preamble reaches a
preset value.

Yes

209

Stop sending the
preamble, and end the
current access process.

No

208

Transmit the preamble by using the
uplink resource and the ramped-up
transmit power.

FIG. 2

11

301

Send an access indication message.

302

If a DPCCH preamble sent by a UE is detected, send an acquisition indication to the UE.

FIG. 3

401

Send an access indication message.

402

Detect whether a DPCCH preamble sent by a UE is received

404

Yes    403

Send an acquisition indication to the UE.

Do not send the acquisition indication to the UE, or send to the UE an indication indicating that the DPCCH preamble is not detected.

FIG. 4

501

Resource receiving module

502

Preamble sending module

503

Access determination module

FIG. 5

501

Resource receiving module

601

Timing module

502

Preamble sending module

602

Indication receiving module

603

Power ramp module

604

Retransmission counting module

503

Access determination module

FIG. 6

701

Resource information
sending module

702

Indication sending module

FIG. 7

701

Resource information
sending module

801

Detection module

702

Indication sending module

FIG. 8

# INTERNATIONAL SEARCH REPORT

| International application No. |
| --- |
| PCT/CN2009/071179 |

### A. CLASSIFICATION OF SUBJECT MATTER

H04W74/08 (2009. 01) i

According to International Patent Classification (IPC) or to both national classification and IPC

### B. FIELDS SEARCHED

Minimum documentation searched (classification system followed by classification symbols)

IPC: H04L, H04B7/-, H04Q7/-, H04W

Documentation searched other than minimum documentation to the extent that such documents are included in the fields searched

Electronic data base consulted during the international search (name of data base and, where practicable, search terms used)

CNPAT, CNKI, WPI, EPODOC:  RANDOM ACCESS PREAMBLE RESOURCE CAPTUR+ ACQUIR+ ACQUISITION DPCCH DEDICATED PHYSICAL CONTROL SHARED CHANNEL

### C. DOCUMENTS CONSIDERED TO BE RELEVANT

| Category* | Citation of document, with indication, where appropriate, of the relevant passages | Relevant to claim No. |
| --- | --- | --- |
| A | WO03100988A2  (NOKIA CORP)<br>04 Dec. 2003 (04. 12. 2003) See the whole document | 1-16 |
| A | WO2008024788A2   (QUALCOMM INC)<br>28 Feb. 2008 (28. 02. 2008) See the whole document | 1-16 |
| A | CN101155421A  (BEIJING SAMSUNG TELECOM TECH ET-AL)<br>02 Apr. 2008 (02. 04. 2008) See the whole document | 1-16 |
| A | CN101395862A  (NOKIA CORP)<br>25 Mar. 2009 (25. 03. 2009)  See the whole document | 1-16 |

☐ Further documents are listed in the continuation of Box C.      ☒ See patent family annex.

| | |
| --- | --- |
| *    Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim (S) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"document member of the same patent family |

| Date of the actual completion of the international search | Date of mailing of the international search report |
| --- | --- |
| 05 Jan. 2010 (05. 01. 2010) | **14 Jan. 2010 (14.01.2010)** |

| Name and mailing address of the ISA/CN<br>The State Intellectual Property Office, the P.R.China<br>6 Xitucheng Rd., Jimen Bridge, Haidian District, Beijing, China<br>100088<br>Facsimile No. 86-10-62019451 | Authorized officer<br><br>**WANG Zhiwei**<br><br>Telephone No. (86-10)62411285 |
| --- | --- |

Form PCT/ISA /210 (second sheet) (July 2009)

## INTERNATIONAL SEARCH REPORT
Information on patent family members

| International application No. |
| --- |
| PCT/CN2009/071179 |

| Patent Documents referred in the Report | Publication Date | Patent Family | Publication Date |
| --- | --- | --- | --- |
| WO03100988A2 | 04. 12. 2003 | US2003223452A1 | 04. 12. 2003 |
| | | AU2003212571A1 | 12. 12. 2003 |
| | | EP1508217A2 | 23. 02. 2005 |
| | | US6917602B2 | 12. 07. 2005 |
| | | AU2003212571A8 | 27. 10. 2005 |
| | | EP1508217B1 | 24. 06. 2009 |
| | | AT434907T | 15. 07. 2009 |
| WO2008024788A2 | 28. 02. 2008 | US2008273610A1 | 06. 11. 2008 |
| | | WO2008024788A3 | 29. 01. 2009 |
| | | NO20090535A | 23. 03. 2009 |
| | | EP2064908A2 | 03. 06. 2009 |
| | | CN101507348A | 12. 08. 2009 |
| CN101155421A | 02. 04. 2008 | WO2008038983A1 | 03. 04. 2008 |
| | | US2008139214A1 | 12. 06. 2008 |
| CN101395862A | 25. 03. 2009 | WO2007083230A2 | 26. 07.2007 |
| | | US2007206531A1 | 06. 09. 2007 |
| | | WO2007083230A3 | 18. 10. 2007 |
| | | EP1982476A2 | 22. 10. 2008 |
| | | INDELNP200806615E | 24. 10. 2008 |
| | | KR20080096557A | 30. 10. 2008 |
| | | MXPA08009283A | 31. 07. 2008 |
| | | JP2009524324T | 25. 06. 2009 |

Form PCT/ISA /210 (patent family annex) (July 2009)